Europäisches Patentamt

European Patent Office

Office européen des brevets

(19)

(11) Publication number: **0 058 815**
A1

(12)  **EUROPEAN PATENT APPLICATION**

(21) Application number: **82100095.7**

(22) Date of filing: **08.01.82**

(51) Int. Cl.³: **B 65 D 1/02,** B 29 C 17/07

(30) Priority: **23.02.81 US 236961**

(43) Date of publication of application: **01.09.82**
**Bulletin 82/35**

(84) Designated Contracting States: **AT BE CH DE FR GB IT LI LU NL SE**

(71) Applicant: **THE CONTINENTAL GROUP, INC., 1 Harbor Plaza, Stamford Connecticut 06904 (US)**

(72) Inventor: **Krishnakumar, Suppayan M., 23 Old Coach Road, Nashway New Hampshire 03060 (US)**

(74) Representative: **Baillie, Iain Cameron et al, c/o Ladas & Parry Isartorplatz 5, D-8000 München 2 (DE)**

(54)  **Preform for use in blow molding plastic bottles.**

(57)  A preform (22) for use in blow molding plastic bottles for carbonated beverages and the like, wherein the preform (22) is made materially shorter than prior art preforms (10) with a double wall thickness configuration wherein the body portion (30) of the preform (22) flares in wall thickness from the shoulder forming portion (26) towards the rounded end portion (28). The body portion of a resultant bottle may be thinner than before possible while at the same time it is of sufficient thickness to resist internal pressures.

EP 0 058 815 A1

- 1 -

PREFORM FOR USE IN
BLOW MOLDING PLASTIC BOTTLES

This invention relates to improvements in the formation of plastic beverage bottles, and more particularly to a preform from which a plastic beverage bottle may be formed.

Plastic beverage bottles, particularly those which are to receive and hold a beverage under pressure, are conventionally formed by injection molding a tubular preform and thereafter blow molding the preform in a blow mold. The amount of plastic required to form the preform is the total amount of plastic required to form the beverage bottle. Accordingly, it is advantageous to be able to provide a preform which, when blown, will properly distribute the plastic material in those areas of the resultant bottle which are critical while at the same time starting with a preform of minimum weight.

Most particularly, a plastic beverage bottle has an upper portion of a substantially fixed material weight in that it includes the neck finish wherein the required material has already been reduced to a minimum and an adjacent shoulder portion wherein minimal plastic material has been provided. In a like manner, the bottom structure of the bottle is such that, due to strength and creep resistance requirements, a minimum weight of material is also required, although certain advances are being made in this area. This leaves only the generally cylindrical body portion of the bottle wherein a controlled reduction in weight can be obtained. However, it is necessary that in the stretching of the plastic material within the blow mold the body portion not be unduly thinned so that it cannot resist the internal pressures for which the bottle is intended.

It has been found, surprisingly, that there can be a savings of plastic material by foreshortening the preform as compared to like preforms while at the same time thinning the body portion. By so foreshortening the preform, and then stretching the preform axially within the blow mold, there can be a controlled thinning down of that portion of the preform which becomes the body of the blow molded bottle.

IN THE DRAWINGS:

Figure 1 is a longitudinal sectional view through a prior art preform.

Figure 2 is a longitudinal sectional view taken through a foreshortened preform in accordance with this invention.

Figure 3 is a schematic axial sectional view through a blow mold showing the manner in which the preform of Figure 2 may be advantageously utilized.

Although the invention of this application is not so limited, a typical example of the invention is found in two liter PET bottles intended for the packaging of carbonated soft drinks. At the present, the injection molded preform from which a conventional two liter bottle is formed has a length of about 6.8 inches (17.27 cm) and weighs 68 grams. In accordance with this invention, it has been found that by reducing the length of the preform to be of about 5.8 inches (14.73 cm) and, of course, thickening the wall of the preform, a preform having a weight of 64 grams can be advantageously utilized to provide a two liter bottle of like configuration in the same mold as previously utilized with the resultant blow molded bottle having sufficient strength for the purpose of packaging carbonated beverages.

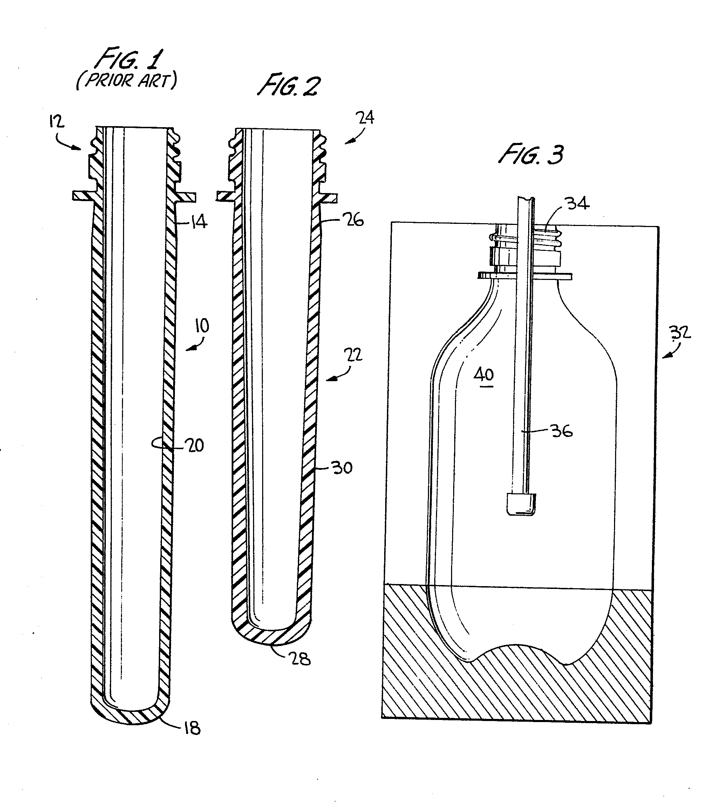

Referring now to Figure 1, it will be seen that there is illustrated a conventional preform being used for forming two liter bottles of the so-called petaloid bottom type, which bottles are generally disclosed in U. S. Patent No. 3,598,270. The preform of Figure 1 is generally identified by the numeral 10 and, generally speaking, includes an injection molded neck finish 12 at the upper end thereof. The preform also includes an upper bottle shoulder forming portion 14 immediately below the neck finish 12. Thereafter, the preform includes a body portion 16 which terminates in a rounded closed end 18. The body portion 16 is formed in a tapered bore within a preform mold (not shown) and thus the body portion 16 tapers in diameter from the upper end thereof to its lower end. The preform 10 is hollow and when injection molded is formed on a core (not shown). The core, like the bore of the injection mold, is tapered so that the preform may be separated from both the injection mold and the core. Thus, the body 16 has an internal bore 20 which tapers longitudinally of the body and this taper is generally parallel to the taper of the exterior of the body 16 so that the body 16 is generally of a constant wall thickness.

Referring now to Figure 2, it will be seen that there is illustrated a preform formed in accordance with this invention, the preform being generally identified by the numeral 22. The preform 22 includes an upper neck finish 24 which will be identical to

- 4 -

the neck finish 12. It also includes an upper shoulder portion 26 which may be identical to the shoulder 14. It further includes a closed bottom 28 which is somewhat similar to the bottom 18. Finally, the preform 22 includes a body portion 30.

A comparison of Figures 1 and 2 will clearly indicate that the preform 22 is foreshortened as opposed to the preform 10. In accordance with this invention, the preferred embodiment of the foreshortened preform 22 has an overall length of about 5.8 inches (14.73 cm).

The body 30 has an external taper corresponding to the taper of the exterior of the body 16. On the other hand, the bore of the preform 22 has a much greater taper and the body portion 30, instead of having a substantially constant wall thickness as in the case of the body 16, flares or increases in thickness from the open end toward the closed end. Notwithstanding the thicker wall of the body portion 30, the preform of Figure 2 will have an overall weight of about 64 grams.

Reference is now made to Figure 3 which is a schematic sectional view through a blow mold for forming a plastic bottle intended for packaging a carbonated beverage, the bottle being of the type illustrated in U. S. Patent No. 3,598,270. The blow mold, which is of a multiple split construction, is generally identified by the numeral 32 and is of a conventional configuration. Most specifically, the blow mold 32 is used in combination with the preform 10 of Figure 1 to form blow molded bottles which are commercially acceptable. The same blow mold 32 receives the preform 22. At this time it is to be understood that the preform 22 has been heated and it is quite feasible that the various portions of the preform may be at different temperatures. There may

- 5 -

also be a temperature gradient within the body portion 30 so that parts of the body portion 30 may be more susceptible to material flow than others.

The preform 22 is received in a neck portion 34 of the blow mold and is thus gripped tightly within the blow mold in the normal manner. The blow mold has associated therewith a stretch rod 36 with an enlarged end 38. If desired, the stretch rod 36 may be part of a blowing nozzle 40 through which blowing gas (normally air) is introduced into the bottle.

The stretch rod is preferably actuated in advance of the introduction of blowing air so as axially to elongate the preform 22, as is generally shown in Figure 3. By controlling the heating of the preform 22, the body portion 30 in particular may be axially elongated and at the same time thinned under controlled conditions. Then, when blowing air is introduced into the preform, the primary stretching of the preform will be radial with the result that the bottle formed using the preform 22 will have a body portion which is thinner than the like bottle formed in the same blow mold from a preform 10. By providing for a controlled thinning of the bottle body portion while at the same time maintaining the thickness of the wall of the body portion sufficiently great to resist internal pressures, there can be a reduction in the amount of plastic material required to form the bottle. Thus, with the preform 22, there can be a savings of plastic material on the order of 4 grams per preform. Since this represents a savings of approximately 6% of the material, it can be seen that this can be a major factor in commercial competition, particularly with the rapidly increasing cost of base plastic materials.

1. A plastic material preform to be blow molded into a thin wall bottle of a preselected size having a neck finish and a multi-footed bottom, said preform comprising a·neck finish, a flared shoulder forming portion, an annular cross-sectional body portion and a rounded end portion, said preform being characterized in that said body portion flares in wall thickness from said shoulder forming portion towards said rounded end portion.

2. A preform according to claim 1, characterized in that said body portion externally decreases in diameter from said shoulder forming portion towards said rounded end portion.

3. A preform according to claim 1 or 2, characterized in that said preform is shorter in length than other preforms conventionally used in forming like bottles.

4. A preform according to claim 2 or 3, characterized in that said preform has an overall weight less than said prior preforms.

5. A method of forming a plastic material bottle with a saving of plastic material, said method comprising the steps of providing an existing blow mold normally used in combination with a prior preform of a preselected length, characterized by forming a new preform cooperable with said blow mold, said new preform being of a length shorter than said prior preform and with a body wall thickness greater than that of said prior preform and of a lesser weight than that of said prior preform, heating said new preform to a blow molding temperature and placing said new preform in said blow mold, and then axially elongating said new preform to elongate said new preform primarily in a body portion thereof with a resultant reduction in said body wall thickness, and then blow molding said elongated new preform in said blow mold to form a bottle.

6. The method of claim 5, characterized in that said new preform is formed with the thickness of the wall of the body portion increasing towards a bottom of said new preform.

7. The method of claim 5 or 6, characterized by reducing the wall thickness of the body portion of the bottle.

0058815

1/1

FIG. 1
(PRIOR ART)

FIG. 2

FIG. 3

## DOCUMENTS CONSIDERED TO BE RELEVANT

| Category | Citation of document with indication, where appropriate, of relevant passages | Relevant to claim |
|---|---|---|
| X | US - A - 3 934 743 (MC CHESNEY et al.) <br><br> * Totality; especially fig. 1,2 * | 1,2,3, 4,5-7 |
| X | DE - A1 - 2 702 495 (AMERICAN CAN CA) <br><br> * Fig. 1,2 * | 1,2,3, 4 |
| X | GB - A - 1 435 318 (AMERICAN CAN COMP) <br><br> * Fig. 1,2 * | 1,2,3, 4 |
| X | DE - A - 2 340 457 (SHOWA DENKO) <br> * Page 13; fig. 2-5 * <br> & US-A-3 923 943 | 5 |
| X | DE - A1 - 2 950 233 (KOGYOSHO CO LTD) <br><br> * Totality * <br> & GB - A - 2 037 220 | 5 |
| A | US - A - 4 134 510 (CHANG) <br> * Fig. 2 * | 1 |
| D,A | US - A - 3 598 270 (ADOMAITIS) <br> * Totality * <br><br> ---- | |

**CLASSIFICATION OF THE APPLICATION (Int. Cl. 3)**

B 65 D 1/02
B 29 C 17/07

**TECHNICAL FIELDS SEARCHED (Int.Cl. 3)**

B 65 D 1/00
B 29 C 17/00
B 29 D 23/00
B 65 D 23/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | The present search report has been drawn up for all claims | | |
|---|---|---|---|
| X | | | |
| Place of search | Date of completion of the search | Examiner | |
| VIENNA | 19-05-1982 | CZUBA | |

EPO Form 1503.1 06.78